# EUROPÄISCHE PATENTSCHRIFT

(11) **EP 1 478 703 B1**
(45) Veröffentlichungstag und Bekanntmachung des Hinweises auf die Patenterteilung: **19.07.2006**
(21) Anmeldenummer: 02722118.3
(22) Anmeldetag: 21.02.2002
(51) Int. Cl.: C09D 5/34, C09K 3/10

(54) **VERFAHREN ZUM BESCHICHTEN EINES SUBSTRATES MIT EINER DICHTMASSE, DICHTMASSE VOR UND NACH DER AUSHÄRTUNG SOWIE VERWENDUNG DER NICHT-AUSGEHÄRTETEN DICHTMASSE**
METHOD FOR COATING A SUBSTRATE WITH A SEALANT, SEALANT BEFORE AND AFTER HARDENING, AND USE OF THE NON-HARDENED SEALANT
PROCEDE POUR ENDUIRE UN SUBSTRAT AU MOYEN D'UNE MASSE D'ETANCHEITE, MASSE D'ETANCHEITE AVANT ET APRES DURCISSEMENT ET UTILISATION D'UNE MASSE D'ETANCHEITE NON DURCIE

(43) Veröffentlichungstag der Anmeldung: 24.11.2004
(73) Patentinhaber: Chemetall, 60487 Frankfurt (DE)
(72) Erfinder: BONS, Peter, 61203 Reichelsheim (DE); BUROCK, Heinz, 65527 Niedernhausen (DE); DIEZ, Francisco, 64546 Moerfelden-Walldorf (DE); PAUL, Andrea, 63533 Mainhausen (DE)
(74) Vertreter: Hübner, Günter
(86) Internationale Anmeldenummer: PCT/EP2002/001868
(87) Internationale Veröffentlichungsnummer: WO 2003/070838

(56) Entgegenhaltungen:
- EP-A- 0 392 171
- EP-A- 0 399 331
- EP-A- 1 103 571
- DE-A- 2 535 833
- US-A- 3 963 680
- US-A- 4 503 161
- US-A- 4 604 444

## Beschreibung

Die Erfindung betrifft ein Verfahren zum Beschichten eines Substrates mit einer Dichtmasse, insbesondere zum Verbinden bzw. Verkleben von Teilen oder/und Abdichten bzw. Verfüllen von Hohl- bzw. Zwischenräumen. Dieses Verfahren ist vor allem für die Luft- und Raumfahrt von Interesse, aber, auch überall dort, wo eine lange Verarbeitungszeit in Verbindung mit einer möglichst kurzen Aushärtungszeit der Dichtmasse erforderlich ist.

Dichtmassen werden heute für die unterschiedlichsten Zwecke eingesetzt. Sie dienen insbesondere zum Abdichten von Konstruktionselementen, zum Aufkleben z.B. von Blechen auf vorhandenen Strukturen wie z.B. Segmenten eines Flugzeugs bzw. zum Korrosionsschutz an Stellen, wo z.B. im Bereich von Bohrungen die Korrosionsschutzschichten der metallischen Elemente verletzt oder entfernt werden und können vorübergehend eine tragende Funktion z.B. während des Transports von im Aufbau befindlichen Strukturen . übernehmen, die nachträglich noch mit dauerhaften tragenden Verbindungselementen ausgestattet werden.

DE-A-25 35 833 veröffentlicht u.a. Dichtmassen auf Basis von Polyester, Carbonsäureester oder/und deren Derivaten, wobei reaktive Stoffe wie Reaktionsinitiatoren und Beschleuniger bzw. Füllstoffe verkapselt vorliegen können.

EP-A2-0 399 331 handelt von Zusammensetzungen für Klebstoff enthaltende Produkte auf Basis von warmhärtenden Polyurethanen, die in situ durch Feuchtigkeit bzw. mit Hilfe von Wasser freisetzenden Verbindungen gehärtet werden.

EP-A2-0 399 331 betrifft Zusammensetzungen auf Basis von bestimmten Unterklassen von Polyorganosiloxanen und gekapselten Platinkatalysatoren in thermoplastischem Polymer. US-A-4,604,444 schützt Zusammensetzungen auf Basis von Polyorganosiloxan, Vernetzungsmittel und Härtungsbeschleuniger, wobei der Härtungsbeschleuniger verkapselt vorliegt.

US-A-3,963,680 beschreibt Verkapselungen und Verkapselungsmaterialien und US-A-4,503,161 lehrt Mikrokapseln, die mit Lewis-Säure-Katalysatoren bzw. Katalysatorkonzentraten gefüllt sind, aber keine Dichtmassen.

Bisher ist die Herstellung und Instandhaltung von Luft- und Raumfahrzeugen mit einer großen Zahl an Verbindungsstellen mit Dichtmassen außerordentlich aufwendig, da die bisher eingesetzten Dichtmassen, insbesondere solche mit einer langen Verarbeitungszeit, eine sehr lange Zeit für die vollständige Aushärtung bedingen. Als Kriterium für einen gewissen Grad der Aushärtung kann eine Zugscherfestigkeit von 1,8 N/mm² oder eine Shore A Härte von 30 bzw. 35 dienen gemessen entsprechend DIN 65262-1. Eine vollständige Aushärtung erfordert jedoch viel längere Zeiten als die Aushärtezeiten zum Erreichen dieser Eigenschaftswerte.

Der Nachteil bei den bekannten Dichtmassen und Verfahren für ihre Verarbeitung und Aushärtung liegt darin, dass bei einer gegebenen einzuhaltenden Verarbeitungszeit zu wenig Katalysator in die Dichtmasse eingebracht werden kann, um die Aushärtung im gewünschten Maße zu beschleunigen. Dies führt insbesondere bei langen Verarbeitungszeiten dazu, dass die Dichtmassen aufgrund ihrer damit verbundenen langen Aushärtungszeiten Arbeitsprozesse stark verzögern. Eine rapide Durchhärtung ist aber auch bei Dichtmassen mit langer Verarbeitungszeit erforderlich.

Es bestand die Aufgabe, unter Beibehaltung von längeren oder langen Verarbeitungszeiten oder sogar unter Verlängerung der Verarbeitungszeit sehr kurze Aushärtungszeiten zu gewährleisten.

Die heute eingesetzten Dichtmassen erlauben eine Verarbeitungszeit von höchstens 20 Minuten, um bei der Aushärtung innerhalb von 45 Minuten eine Zugscherfestigkeit von 1,8 N/mm² zu erreichen. Diese Vorgabe wird nur mit großer Mühe und besonderen Dichtmassenzusammensetzungen erreicht.

Als Kriterium für die mechanische Belastbarkeit einer in der Aushärtung befindlichen, langsamer aushärtenden Dichtmasse wird häufig neben oder anstatt der Zugscherfestigkeit eine Shore A Härte von mindestens 35 oder sogar nur von 30 herangezogen, bei der sich die Dichtmasse nicht mehr plastisch verformen lässt und nicht mehr z.B. beim Transport verschmiert wird. Eine typische Shore A Härte für eine vollständig ausgehärtete Dichtmasse liegt bei 55 +/- 10.

Eine typische Aushärtungszeit einer hochwertigen konventionellen Dichtmasse mit einer längeren Verarbeitungszeit benötigt z.B. bei einer Verarbeitungszeit von 2 h eine Zeit bis zum Erreichen einer Shore A Härte von 35 im Bereich von 24 h bis 48 h. Der Anmelderin ist eine Sonderdichtmasse bekannt geworden, bei der mit einer Verarbeitungszeit von 2 h eine Aushärtung bis zu 35 Shore A in 9 h in einer sehr speziellen, Zusammensetzung erzielt werden konnte. Die hier angesprochene langsam aushärtende hochwertige Dichtmasse war nach etwa 14 Tagen vollständig ausgehärtet. Eine derartige Dichtmasse kann z.B. für die Aufbringung von sog. Raupen und zum Schutz und zur Abdichtung von Kantenprofilen eingesetzt werden.

Eine typische Aushärtungszeit einer hochwertigen konventionellen Dichtmasse mit einer langen Verarbeitungszeit benötigt z.B. bei einer Verarbeitungszeit von 48 h im Bereich von etwa 30 bis zu 56 Tagen bis zum Erreichen einer Shore A Härte von nur 30. Die Shore A Härte von 35 wird erst nach weiteren zusätzlichen Tagen der Aushärtung erreicht. Solche Dichtmassen werden z.B. im Flugzeugbau als sogenannte Zwischenlagendichtmassen im Rumpfbereich durch flächigen Auftrag zwischen zwei Blechen eingesetzt.

Ziel einer Dichtmassenentwicklung musste es daher sein, eine Verarbeitungszeit von z.B. 48 h zu ermöglichen, ohne hierbei zur Aushärtung weit mehr als 48 h zu benötigen. Denn die Verarbeitungszeit und Aushärtungszeit sind bei den konventionellen Dichtmassen grundsätzlich proportional, wobei die Aushärtungszeit immer ein großes Vielfaches der Verarbeitungszeit ist.

Es bestand daher die Aufgabe, eine Dichtmasse und ein Verfahren zum Beschichten von Substraten mit dieser Dichtmasse vorzuschlagen, bei dem eine vorgegebene - meist längere oder lange - Verarbeitungszeit gewählt werden kann, bei dem die Aushärtungszeit jedoch deutlich verkürzt werden kann, möglichst ohne Beeinträchtigung des übrigen Leistungsprofils. Die Dichtmasse sollte industriell einsetzbar sein. Für den Einsatz im Bereich der Luft- und Raumfahrt sollte die Dichtmasse die gleichen hochwertigen Eigenschaften erzielen können wie die dafür verwendeten konventionellen Dichtmassen.

Die Aufgabe wird gelöst durch ein Verfahren zum Beschichten eines Substrates mit einer Dichtmasse; das dadurch gekennzeichnet ist, daß die Dichtmasse als chemische Basis entweder
a) mindestens ein mercaptöterminiertes Polysulfid, mindestens einen mercaptoterminierten Polythioether oder/und mindestens einen mercaptoterminierten Polyether zusammen mit mindestens einem Acrylat, mindestens einem isocyanat oder/und mindestens einem Epoxidharz als Vernetzer,
b) mindestens ein acrytatterminiertes Polysuflid, mindestens einen acrylatterminierten Polythioether oder/und mindestens einen acrylatterrminierten Polyether zusammen mit-mindestens einem mercaptoterminierten Polymer oder/und mindestens einem mehrfach mercapto-funktionalisierten Vemetzer,
c) mindestens ein mercaptoterminiertes Polysulfid, mindestens einen mercaptoterminierten Polythioether oder/und mindestens einen mercaptoterminierten Polyether zusammen mit mindestens einem Sauerstoffspender oder
d) mindestens ein Polyol, mindestens ein hydroxy-funktionalisiertes Polysulfid, mindestens einen hydroxy-funktionalisierten Polythioether oder/und mindestens einen hydroxy-funkfionationalisierten Polyether zusammen mit mindestens einem Isocyanat als Vernetzer aufweist und
wobei die noch nicht ausgehärtete Dichtmasse einen latenten Katalysator enthält, der bei einer äußeren Energieeinwirkung in aktiver Form freigesetzt oder/und gebildet wird und dadurch die Reaktion zwischen Grundpolymer und Härter zur Aushärtung auslöst oder/und beschleunigt.

Diese Dichtmasse dient insbesondere zum Verbinden bzw Verkleben von Teilen oder/und zum Abdichten bzw. Verfüllen von Hohl-bzw. Zwischenräumen. Diese Teile können zB. Konstruktionselemente sein.

Die Dichtmasse kann einkomponentig sein und den latenten Katalysator in der einen Anmischung bereits enthalten. Die Dichtmasse ist in vielen Fällen.zweikömponentig, wobei der latente Katalysator dann in der Grundmasse oder/und im Härter enthalten ist. Grundsätzlich könnte die Dichtmasse auch mehr als 2 Komponenten enthalten, was Jedoch normalerweise unerwünscht ist. Der latente Katalysator kann hierbei vorzugsweise bereitslertig vorliegen. Der Katalysator könnte jedoch anfangs auch in Form von Ausgangs oder/und sich komplementär ergänzenden Teilkomponenten vorliegen, die erst später miteinander bei äußerer Energieeinwirkung zum aktiven Katalysator reagieren.

Der an sich aktive Katalysator kann auf mindestens eine der drei nachfolgend genannten Weisen deaktiviert sein.
1. Die Dichtmasse kann einen latenten Katalysator in aktiver Form eingekapselt enthalten, dessen Kapselung bei äußerer Energieelnwirkung geschmolzen, aufgesprengt oder/und durch chemische Reaktion geöffnet oder aufgelöst wird.
2. Die Dichtmasse kann einen latenten Katalysator in passiver Form enlhalten, der durch eine Schutzgruppe deaktiviert ist und bei der die Deaktivierung des Katalysators durch äußere Energieeinwirkung zur Abspaltung der Schutzgruppe aufgehoben werden kann und bei der der Katalysator dadurch in aktive Form überführt werden kann.
3. Die Dichtmasse kann einen latenten Katalysator enthalten, der anfangs in Form von Ausgangs- oder/und sich komplementär ergänzenden Teilkomponenten vorliegen kann, die erst später miteinander bei äußerer Energieeinwirkung zum aktiven Katalysator reagieren.

Der durch die Reaktion gebildete aktive Katalysator seinerseits löst die Reaktion zwischen Grundpolymer und Härter aus oder/und beschleunigt diese Reaktion.

Die zur Aktivierung des latenten Katalysators notwendige Wärmeenergie kann durch Wirbelströme direkt im mit Dichtmasse beschichteten, elektrisch leitfähigen Substrat erzeugt werden, wobei ein geeigneter, die Wirbelströme verursachender Induktor in einer Entfernung vom Substrat von ≤ 20 cm angebracht sein kann und von einem hochfrequenten Wechselstrom durchflossen werden kann.

Das zur Aktivierung des latenten Katalysators notwendige Temperatumiveau kann zunächst durch einen hohen Induktorstrom innerhalb von 0,1 bis 20 Minuten erreicht werden und anschließend kann ein für die Aushärtung der Dichtmasse förderliches Temperatumiveau aufrechterhalten werden, wobei der den Wärmeeintrag bestimmende, durch den Induktor fließende Strom ggf. zur Regulierung verringert oder/und in Intervallen an- und abgeschaltet oder/und pulsartig erhöht und verringert werden kann.

Der latente Katalysator kann durch Einwirken von elektromagnetischer Strahlung, insbesondere durch Wärme, freigesetzt werden. Die Wärmeenergie wird vorzugsweise durch Infrarotstrahler, als Kontaktwärme z.B. durch mindestens eine auf der Rückseite des beschichteten Substrats aufliegende oder/und im Abstand gehaltene Heizmatte bzw. durch mindestens ein Heizband übertragen. Die Wärme kann nicht nur durch direkte, sondern auch ggf. gleichzeitig durch indirekte Widerstandsheizung, induktive Beheizung oder/und hochfrequente Anregung wie z.B. Mikrowellen oder Ultraschall eingebracht werden. '

Die induktive Beheizung ist besonders geeignet, da die Wirbelströme hierbei nur in den ankoppelnden Materialien wie den mit der Dichtmasse beschichteten metallischen oder elektrisch leitfähiges Material enthaltenden Komponenten wirken und die Dichtmassen auf diese Weise in kurzer Zeit und reproduzierbar beheizt werden können. Hierbei kann vor Die Induktionsspulen können hierbei in Halterungen, Träger, Spannelemente, Verschalungen usw. integriert werden. Sie können in ihrer Form flexibel an die jeweiligen Elemente und je nach Art der erforderlichen Bestrahlung angepasst werden. So kann beispielsweise eine fast punktgenaue Wärmeeinbringung erzielt werden. Insbesondere über die induktive Beheizung ist eine besondere Reproduzierbarkeit der Energieeinbringung gewährleistbar, da durch die Frequenz des Wechselstroms die Eindringtiefe in die metallischen bzw. elektrisch leitfähigen Substrate und über die Dauer und Stärke des Induktionsstroms die Wärmeübertragungsrate geregelt werden können.

Ein hervorragendes Verfahren zum Einbringen der Wärme ist die direkte Anregung der Dichtmasse oder/und des latenten oder/und aktiven Katalysators mit mindestens einer ihrer Eigenfrequenzen. Dadurch erfolgt die Energieeinbringung deutlich effizienter, da nicht indirekt über das Substrat oder/und die Umgebung geheizt wird:

Grundsätzlich kann je nach chemischem System der Dichtmasse und des Katalysators bzw. seiner Kapselung oder Deaktivierungsart jede zur Aktivierung geeignete Art der Energieeinbringung gewählt werden. Die Wirkung der Kapselung wird vorzugsweise durch Hochfrequenzanregung oder/und Wärme beendet.

Der latente Katalysator kann in einem Temperaturbereich von 60 bis 120 °C freigesetzt werden, vorzugsweise in einem Temperaturbereich von 75 bis 105 °C, besonders bevorzugt von 80 bis 98 °C. Hierdurch kann die Aushärtungszeit bis zum Erreichen von 35 Härte Shore A um 10 bis 99,95 %, insbesondere um 20 bis 99,9 %, verkürzt werden.

Die Wärme kann vorzugsweise in einem Zeitraum von 0,1 bis 20 Minuten, vorzugsweise in einem Zeitraum von 0,5 bis 12 Minuten, auf den latenten Katalysator einwirken, um ihn freizusetzen. Insbesondere bei kleineren oder dünnwandigeren Teilen kann diese Zeit unter 2 Minuten liegen.

Damit ist es möglich, auf Wunsch hin die Reaktion(en) auszulösen und die Aushärtung zu starten, das sog. "sealant cure on demand". Dabei ist es bevorzugt, dass die Aushärtung möglichst im Bereich von 0,05 bis 10 Minuten nach Beginn der Energieeinbringung beginnt und eine Aushärtung im Bereich von 1 bis 300 Minuten bis zum Erreichen der Shore A Härte von 35 erfolgt.

Die Dichtmasse kann nach der Freisetzung des Katalysators für die Zeit der Aushärtung mit einer Temperatur im Bereich von 40 bis 90 °C beaufschlagt werden. Das hilft, um die Aushärtung zu beschleunigen. Eine Temperaturerhöhung um etwa 10 °C kann dabei die Aushärtungsreaktion u.U. etwa verdoppeln.

Als Substrate, auf die eine Dichtmasse aufgebracht wird, bzw. als Elemente, die mit einer Dichtmasse kontaktiert wird, können metallische Materialien wie z.B. Aluminium, Aluminium-haltige Legierungen, Edelstahl, sonstige Stähle, Kupfer- und Kupfer-haltige Legierungen, Magnesium-haltige Legierungen, Titan und Titan-haltige Legierungen, Verzinkungen und andere Oberflächen-Veredelungen, Kohlenstoff-reiche Materialien wie z.B. CFC und CFK, Kunststoffe, insbesondere Kunststoffe mit leitfähigen Einlagerungen oder mit Anteilen von elektrisch leitfähigen Polymeren, Stein, Kunststein, Zement, Beton, Glas, Keramik sowie beschichtete Materialien, insbesondere solche mit einer Beschichtung zur Verhinderung der Korrosion, auf Basis eines Primers, einer Zink-haltigen Grundierung oder/und mindestens eines Lackes oder einer ähnlichen polymeren Beschichtung.

Ein Maß für die Verarbeitungszeit ist die Ausspritzrate, die durch das Ausspritzen einer Dichtmasse aus einer Kartusche bei 6,2 bar nach DIN 65262-1 bestimmt werden kann. Die erfindungsgemäßen Dichtmassen weisen eine Ausspritzrate im Bereich von 15 bis 4000 g/min auf, vorzugsweise im Bereich von 30 bis 2000 g/min, besonders bevorzugt im Bereich von 50 bis 1000 g/min.

Nach der sog. Tack-free-time TFT klebt die Dichtlmasse nicht mehr und eine Polyethylenfolie kann dann rückstandsfrei von der Dichtmassenoberftäche entsprechend DIN 65262-1 abgezogen werden. Die erfindungsgemäßen Dichtmassen weisen eine Tack-free-time im Bereich von 3 bis 60 Minuten auf, vorzugsweise im Bereich von 4 bis 30 Minuten, besonders bevorzugt im Bereich von 5 bis 15 Minuten.

Die erfindungsgemäße Dichtmasse kann nach den grundsätzlich bekannten Methoden auf den Substraten aufgebracht werden wie z.B. durch Aufspritzen, Aufrollen, Aufpinseln, Aufrakeln oder Aufspachteln.

Die Aufgabe wird auch gelöst durch eine nicht-ausgehärtete Dichtmasse, die in ihrem Zustand vor oder nach dem Beginn der Aushärtung sein kann, enthaltend ein Grundpolymer und einen Härter zusammen mit einem Katalysator, die dadurch gekennzeichnet ist, dass sie eine chemische Basis gemäß Anspruch 1 aufweist und dass der Katalysator latent enthalten ist und durch äußere Energieeinwirkung in aktiver Form freigesetzt werden kann. Der Katalysator kann bei zweikomponentigen Systemen in der Grundmasse, im Härter oder in beidem enthalten sein.

Bei der nicht-ausgehärteten Dichtmasse kann der latente Katalysator in aktiver Form eingekapselt enthalten sein, insbesondere in einer polymeren Hülle.

Der latente Katalysator kann in der nicht-ausgehärteten Dichtmasse in passiver Form durch eine Schutzgruppe deaktiviert enthalten sein. Die Deaktivierung des Katalysators kann durch äußere Energieeinwirkung zur Abspaltung der Schutzgruppe aufgehoben werden, und der Katalysator kann dann in die aktive Form überführt werden.

Die nicht-ausgehärtete Dichtmasse kann einen latenten Katalysator enthalten, der anfangs in Form von Ausgangs- oder/und sich komplementär ergänzenden Teilkomponenten vorliegt, die erst später miteinander bei äußerer Energieeinwirkung zum aktiven Katalysator reagieren. Der durch diese Reaktion gebildete aktive Katalysator seinerseits löst die Reaktion zwischen Grundpolymer und Härter aus oder/und beschleunigt diese Reaktion.

Die Zusammensetzung der erfindungsgemäßen Dichtmasse ist - wenn man von den Katalysatoren bzw. deren Komponenten und der Kapselung absieht - grundsätzlich bekannt. Die nicht-ausgehärtete Dichtmasse wird oft neben dem Grundpolymer, dem Härter und dem ggf. gekapselten Katalysator auch mindestens einen Beschleuniger, mindestens einen Haftpromotor, mindestens einen Füllstoff, u.U. in Form von Hohlfüllkörpern, ggf. mindestens einen Verzögerer, ggf. mindestens ein rheologisch wirksames Additiv z.B. zum Anpassen der Viskosität bzw. Thixotropie sowie ggf. mindestens ein die Oberfläche beeinflussenden Additiv wie z.B. mindestens ein Tensid, ggf. mindestens einen Entschäumer oder/und ggf. mindestens einen Korrosionsinhibitor enthalten - insbesondere einen chromatfreien Korrosionsinhibitor.

Die nicht-ausgehärtete Dichtmasse kann zum Kleben von Teilen und ggf. der Abdichtung dienen, insbesondere in der Luft- und Raumfahrt.

Sie kann als chemische Basis (Basispolymer, Bindemittel) mindestens ein mercaptoterminiertes Polymer - insbesondere ein mercaptoterminiertes Polysulfid, einen mercaptoterminierten Polythioether oder/und einen mercaptoterminierten Polyether - zusammen mit mindestens einem Acrylat, mindestens einem Isocyanat oder/und mit mindestens einem Epoxidharz als Vernetzer sowie ggf. zusammen mit mindestens einem mehrfach mercapto-funktionalisierten Vernetzer oder/und mit mindestens einem hydrofunktionalisierten Vernetzer aufweisen.

Sie kann als chemische Basis mindestens ein acrylatterminiertes Polymer - insbesondere ein acrylatterminiertes Polysulfid, einen acrylatterminierten Polythioether oder/und einen acrylatterminierten Polyether - zusammen mit mindestens einem mercaptoterminierten Polymer - insbesondere ein mercaptoterminiertes Polysulfid, einen mercaptoterminierten Polythioether oder/und einen mercaptoterminierten Polyether - oder/und mit mindestens einem mehrfach mercapto-funktionalisierten Vernetzer aufweisen.

Sie kann als chemische Basis mindestens ein mercaptoterminiertes Polymer - insbesondere ein mercaptoterminiertes Polysulfid, einen mercaptoterminierten Polythioether oder/und einen mercaptoterminierten Polyether - und mindestens einen Sauerstoffspender - als Sauerstoffspender vorzugsweise ein Mangan-haltiges Oxid wie Mangandioxid, ein Peroxid insbesondere eines Erdalkalimetalls, ein Perborat oder/und Cumolhydroperoxid - aufweisen.

Der mehrfach mercapto-funktionalisierten Vernetzer kann z.B. Trimethylolpropantrimercaptoacetat oder/und Pentaerythritoltetra-3-mercaptopropionat sein.

Sie kann als chemische Basis mindestens ein Polyol oder/und ein hydroxy-funktionalisiertes Polymer - insbesondere ein hydroxy-funktionalisiertes Polysulfid, einen hydroxy-funktionalisierten Polythioether, einen hydroxy-funktionalisierten Polyether oder/und hydroxy-funktionalisiertes Polyester - und mindestens ein Isocyanat als Vernetzer aufweisen.

Als Isocyanat sind insbesondere Isophorondiisocyanat IPDI, MDI, Toluoldiisocyanat TDI oder/und Prepolymere dieser Isocyanate bevorzugt.

Der Gehalt an Basispolymer und Vemetzem (Härtern) kann in weiten Bereichen variieren, insbesondere zwischen 38 und 99,5 Gew.-%, vorzugsweise im Bereich von 50 bis 98 Gew.-%, besonders bevorzugt im Bereich von 60 bis 92 Gew.-%. Dieser Gehalt beträgt bevorzugt mindestens 65 Gew.%, besonders bevorzugt mindestens 70 Gew.-% und ganz besonders bevorzugt mindestens 75 Gew.-%. Dieser Gehalt beträgt bevorzugt höchstens 95 Gew.-%, besonders bevorzugt höchstens 90 Gew.-% und ganz besonders bevorzugt höchstens 85 Gew.-%. Er wird vor allem auch durch den Gehalt an Füllstoffen und weiterhin an Katalysatoren bestimmt. Der Gehalt an Vernetzern liegt vorzugsweise im Bereich von 5 bis 60 Gew.-%, besonders bevorzugt im Bereich von 8 bis 50 Gew.-% und beträgt insbesondere mindestens 10 bzw. 12 Gew.-% bzw. höchstens 40 bzw. 30 Gew.-%. Der Gehalt an Sauerstoffspendem liegt, soweit solche zugegeben werden, vorzugsweise im Bereich von 1 bis 25 Gew.-%, besonders bevorzugt im Bereich von 4 bis 15 Gew.-% und beträgt insbesondere mindestens 6 Gew.-% bzw. höchstens 10 Gew.-%.

Die nicht-ausgehärtete Dichtmasse kann als aktiven Katalysator mindestens eine organische Stickstoffverbindung, mindestens eine metallorganische Verbindung oder/und mindestens ein Metalloxid enthalten und kann ggf. als Kapselung eine polymere Hülle aufweisen. Als organische Stickstoffverbindung kann z.B. ein aliphatisches, cycloaliphatisches oder/und aromatisches Amin, ein Polyamin, ein Amid, ein Polyamid oder/und ein Imidazol dienen, als metallorganische Verbindung kann z.B. eine solche des Eisens, des Titans, des Wismuts oder/und des Zinns bzw. z.B. ein Laurat, ein Octoat oder/und ein Acetylacetonat sowie als Metalloxid kann z.B. mindestens eines des Bariums, des Magnesiums oder/und des Zinks Verwendung finden.

Die den Katalysator umgebende polymere Hülle kann so beschaffen sein, daß sie vor der äußeren Energieeinwirkung nicht unterhalb von 40 °C schmelzen kann, noch in diesem Temperaturbereich chemisch durch die umgebenden Stoffe angegriffen werden kann, wobei der Katalysator vor der äußeren Energieeinwirkung nicht durch Diffusion aus der polymeren Hülle austreten kann.

Der aktive Katalysator kann auf Basis von mindestens einer Stickstoffverbindung wie z.B. einem Amin vorliegen und kann durch Reaktion mit mindestens einer H-aciden Verbindung wie z.B. einer Säure oder/und einem Phenol blockiert sein. Durch diese Reaktion, die zu einem Addukt oder/und einem Salz führt, wird der aktive Katalysator zu einem latenten passiven Katalysator. Durch äußere Energieeinwirkung kann die Reaktion unter Freisetzung des aktiven Katalysators umgekehrt werden.

Die gekapselten aktiven Katalysatoren liegen vor der Anregung meistens in einem wenig aktiven oder völlig inaktiven Zustand vor. Sie gewähren meistens eine längere Verarbeitungszeit der Dichtmasse z.B. von mindestens 1 Stunde. Sie können dicht gekapselt eingesetzt werden oder mit einer schwächeren Kapselung, die eine gewisse Reaktivität auch vor der Anregung/Freisetzung ermöglicht.

Die passiven, mit einer Schutzgruppe versehenen Katalysatoren sind nach ihrer Aktivierung meistens sehr aktiv und weisen oft etwas geringere Verarbeitungszeiten als die gekapselten aktiven Katalysatoren auf.

In vielen Fällen gilt hierbei für die Katalysatoren, dass die Verarbeitungszeit der Dichtmasse etwas kürzer wird, je kürzer ihre Aushärtungszeit ist.

Der Gehalt an Katalysator(en) liegt - jeweils ggf. incl. Gehalt der Kapselung - vorzugsweise im Bereich von 0,001 bis 15 Gew.-%, besonders bevorzugt im Bereich von 0,1 bis 10 Gew.-% und beträgt insbesondere mindestens 0,3 bzw. 0,5 Gew.-% bzw. höchstens 5 bzw. 3 Gew.-%. Höhere Gehalte werden dabei oft aufgrund der Kapselung eingesetzt.

Darüber hinaus kann die nicht-ausgehärtete Dichtmasse auch Füllstoffe und jeweils im Bedarfsfall auch Trocknungsmittel oder/und andere Additive aufweisen.

Als Füllstoffe können alle allgemein bekannten Füllstoffe wie auch z.B. Calciumsilicate, Kreide oder/und Ruß verwendet werden. Der Gehalt an Füllstoffen kann, wenn welche zugegeben werden, vorzugsweise im Bereich von 2 bis 60 Gew.-%, besonders bevorzugt im Bereich von 5 bis 50 Gew.-% liegen und beträgt insbesondere mindestens 10 bzw. 20 Gew.-% bzw. höchstens 40 bzw. 30 Gew.-%. Ein Mindestgehalt kann auch zugesetzt werden, um eine Einfärbung der Masse zu erzielen.

Trocknungsmittel werden vorteilhaft bei Verwendung von Isocyanaten bzw. deren Prepolymeren eingesetzt, wenn eine Schaumbildung vermieden werden soll. Ihr Gehalt liegt dann vorzugsweise im Bereich von 0,1 bis 6 Gew.-%, besonders bevorzugt im Bereich von 1 bis 4 Gew.-%. Alternativ können aber auch schwach geschäumte Dichtmassen verwendet werden, denen kein oder zu wenig Trocknungsmittel zugegeben wurde.

Die nicht-ausgehärtete Dichtmasse kann mit einem Verhältnis der Aushärtungszeit zur Verarbeitungszeit von ≤ 4 : 1 aushärten. Einem Verhältnis der Aushärtungszeit zur Verarbeitungszeit von 4 : 1 entsprechen z.B. 8 h Aushärtungszeit und 2 h Verarbeitungszeit. Dieses Verhältnis liegt vorzugsweise bei ≤ 2,5 : 1 (z.B. 1,25 h : 0,5 h), besonders bevorzugt bei ≤ 1 : 1 (z.B. 1 h : 1 h), vor allem bei ≤ 0,5 : 1 (z.B. 16 h : 48 h). Überraschenderweise wurden chemische Systeme gefunden, bei denen es gelang, ein Verhältnis der Aushärtungszeit zur Verarbeitungszeit von ≤ 0,1 : 1 (z.B. 1 h : 12 h) bzw. sogar von ≤ 0,05 : 1 (z.B. 1 h : 24 h) bzw. sogar von ≤ 0,005 : 1 (z.B. 1 h : 200 h) zu erzielen.

Eine lange Verarbeitungszeit von z.B. 60 Stunden kann vorteilhaft sein, um z.B. während des Vorbereitens und Durchführen des Nietens von Flugzeugrümpfen durch Aufbringen der Dichtmasse, Zusammenfügen von mindestens zwei Konstruktionselementen, Anpressen der Konstruktionselemente und Nietens ausquetschbar zu sein. Nach dem Vernieten und dem Verteilen der Dichtmasse beim Vernieten wird dann üblicherweise für weitere Arbeitsabläufe eine schnelle Aushärtung der Dichtmasse erforderlich.

Die nicht-ausgehärtete Dichtmasse kann ab Freisetzung des latenten Katalysators in bis zu 1 h eine Zugscherfestigkeit von mindestens 1 N/mm² aufweisen, vorzugsweise eine Zugscherfestigkeit von mindestens 2 N/mm² in 40 oder sogar in 30 Minuten. Nach dieser Zeit hat die Dichtmasse noch nicht ihre Endfestigkeit erreicht, ist also noch nicht vollständig ausgehärtet.

Die Aufgabe wird ferner gelöst durch eine erfindungsgemäß hergestellte, ausgehärtete Dichtmasse, die weitgehend oder gänzlich ausgehärtet sein kann und die dadurch gekennzeichnet ist, dass sie nach vollständiger Aushärtung eine Zugscherfestigkeit von mindestens 2 N/mm² erreicht, vorzugsweise von mindestens 2,5 N/mm², besonders bevorzugt von mindestens 3 N/mm².

Die ausgehärtete Dichtmasse kann eine chemische Beständigkeit wie in AIMS 04-05-001 gefordert aufweisen. Die chemische Beständigkeit kann durch eine Mindestschälfestigkeit von mindestens 65 N/25mm charakterisiert werden entweder nach 7 Tagen bei 60 °C in Treibstoff (nach ISO 1817) oder nach 7 Tagen 23 °C in Enteisungsflüssigkeit (nach ISO 11075 Typ 1) oder nach 1000 Stunden in demineralisiertem Wasser bei 35 °C oder nach einer Warmlagerung bei 80 °C über 2000 Stunden.

Sie kann eine Bruchdehnung bei Raumtemperatur von mindestens 150 % gemessen nach DIN 65262-1 aufweisen.

Sie kann eine Tieftemperaturflexibilität gemessen bei - 55 °C nach ISO 1519 bzw. EN 3102 aufweisen.

Die nicht-ausgehärtete Dichtmasse kann insbesondere für den Bau und die Instandhaltung von Luft- und Raumfahrzeugen sowie von Automobilen und Schienenfahrzeugen, im Schiffsbau, im Apparate- und Maschinenbau, im Bauwesen oder für die Herstellung von Möbeln verwendet werden. Sie ist besonders geeignet, um bei Luft- und Raumfahrzeugen die sog. Clips vor dem Nieten z.B. für den Transport zu fixieren und zu befestigen.

### Beispiele:

### Beispiele 1 und 2 zur induktiven Härtung:

**Tabelle 1: Zusammensetzung der Grundmasse von B1 und B2**

| | Rohstoffe in Gew.-% | B 1 | B 2 |
|---|---|---|---|
| ¹ | OH-terminiertes Polysulfid (OH-Zahl ≈ 80) | 69,64 | 74,92 |
| ² | 1,4-Butandiol | 1,42 | 1,53 |
| ³ | Sylosiv A3 | 1,42 | 1,53 |
| ⁴ | Tremin 283/600 EST | 19,90 | 13,76 |
| ⁵ | Luvocarb MT-LS | 7,10 | 7,65 |
| ⁶ | Polycat SA 102/10 (10 %ig in Santicizer 160) | 0,52 | 0,61 |
| ⁷ | Suprasec 2030 | 19,74 | 19,11 |

Komponente 2 dient hierbei als Vemetzer, Komponente 3 als Trocknungsmittel zur Vermeidung der Schaumbildung, Komponenten 4 und 5 als Füllstoffe, Komponente 6 als Katalysator mit Schutzgruppen und Komponente 7 als Härter auf Basis von MDI. Aus den Komponenten 1 bis 6 wurde eine Grundmasse hergestellt, die mit Komponente 7 mit Hilfe eines Spatels ver mischt wurde. Mit der nicht-ausgehärteten Dichtmasse wurden Aluminium-Scherprüfkörper mit einer überlappenden Fläche von 25,0 x 25,0 mm und einer Schichtdicke von 0,15 mm hergestellt. Die Scherprüfkörper wurden zwei Minuten lang mit einer Leistung von ca. einem kW induktiv beheizt. Anschließend war die Masse soweit ausreagiert, dass ein Gewicht von ca. 100 g gehalten werden konnte. Bei Raumtemperatur war die Anmischung nach 35 min noch flüssig. Die induktiv beheizten Scherprüfkörper wurden vor der Prüfung der Scherfestigkeit für 25 bis 45 Minuten bei Raumtemperatur gelagert.

**Tabelle 2: Prüfungsergebnisse an der ausreagierten Dichtmasse von B1 und B2**

| Prüfung | B 1 | B 2 |
|---|---|---|
| Tack-free-time nach Erhitzen in min | 2 | 2 |
| Verarbeitungszeit bei Raumtemperatur in min, ca. | 35 | 35 |
| Zugscherfestigkeit in N/mm² | 2,40 | 1,47 |
| Bruchbild in % Kohäsionsverlust | 100 | 100 |

Das Verhältnis Aushärtungszeit zu Verarbeitungszeit betrug hierbei 0,05 : 1. Außerdem wird davon ausgegangen, dass die chemische Beständigkeit nach AIMS 04-05-001 sowie die Tieftemperaturflexibilität bei - 55 °C im Dornbiegeversuch erreicht wurde.

### Beispiele 3, 4 und 5 zur Härtung mit Mikrowellen:

**Tabelle 3: Zusammensetzung der Grundmassen der Beispiele 3 bis 5**

| | Rohstoffe in Gew.-% | B 3 | B 4 | B 5 |
|---|---|---|---|---|
| ¹ | OH-terminiertes Polysulfid (OH-Zahl ≈ 70) | 92,60 | - | - |
| ² | Thioplast G 10 | - | 56,08 | - |
| ³ | Thiokol LP 33 | - | 37,38 | - |
| ⁴ | Thiokol LP 980 | - | - | 95,33 |
| ⁵ | 1,4-Butandiol | 1,85 | 1,87 | - |
| ⁶ | Sylosiv A3 | 3,70 | 3,74 | 3,74 |
| ⁷ | eingekapselter aminischer Beschleuniger | 1,85 | 0,93 | 0,93 |
| ⁸ | Suprasec 2015 | 27,20 | - | 14,80 |
| ⁹ | Baymidur KL3-5002 | - | 14,60 | - |

Die Komponenten 2 bis 4 sind mercapto-terminierte Polysulfide. Komponente 5 dient hierbei als Vemetzer, Komponente 6 als Trocknungsmittel zur Vermeidung der Schaumbildung, Komponente 7 als Katalysator und Komponente 8 bzw. 9 als Härter auf Basis von MDI. Die Komponenten 1 bis 7 wurden in einem Becher eingewogen und mit dem Spatel intensiv vermischt.

Anschließend wurden die Komponenten 8 bzw. 9 zugegeben und homogenisiert. Der Ansatz im Becher blieb bei Raumtemperatur stehen, um die Verarbeitungszeit, d.h. die Zeit, die das Material flüssig bleibt, zu messen. Ca. 1 bis 2 g des Materials wurden direkt nach dem Anmischen in dünner Schicht auf einen Objektträger aufgetragen und in der Mikrowelle bei einer Leistung von 1200 W aktiviert. Der Mikrowellenimpuls brachte die Kapseln des aminischen Beschleunigers zum Platzen und löste die chemischen Reaktionen durch Freisetzung des Beschleunigers aus. Es wurde die Zeit gemessen, die benötigt wurde, um das Material auszuhärten.

**Tabelle 4: Prüfungsergebnisse an den ausreagierten Dichtmassen B3 bis B5**

| Prüfung | B 3 | B 4 | B 5 |
|---|---|---|---|
| benötigte Härtungszeit in der Mikrowelle | 20 s | 20 s | 20 s |
| Tack-free-time | 20 s | 20 s | 20 s |
| Verarbeitungszeit bei Raumtemperatur | >2h | >2h | >2h |

Das Verhältnis Aushärtungszeit zu Verarbeitungszeit betrug 0,003:1. Außerdem wird davon ausgegangen, dass die chemische Beständigkeit nach AIMS 04-05-001 sowie die Tieftemperaturflexibilität bei - 55 °C im Dornbiegeversuch erreicht wurde.

Bei allen Beispielen war es überraschend, dass es derart gut gelang, eine kurze Aushärtung bei vergleichsweise langer Verarbeitungszeit zu erzielen und dabei auch hervorragende Eigenschaften der Dichtmassen zu erreichen.

## Patentansprüche

1. Verfahren zum Beschichten eines Substrates mit einer Dichtmasse, insbesondere zum Verbinden bzw. Verkleben von Teilen oder/und Abdichten bzw. Verfüllen von Hohl- bzw. Zwischenräumen, **dadurch gekennzeichnet, dass** die Dichtmasse als chemische Basis entweder
a) mindestens ein mercaptoterminiertes Polysulfid, mindestens einen mercaptoterminierten Polythioether oder/und mindestens einen mercaptoterminierten Polyether zusammen mit mindestens einem Acrylat, mindestens einem Isocyanat oder/und mindestens einem Epoxidharz als Vernetzer,
b) mindestens ein acrylatterminiertes Polysulfid, mindestens einen acrylatterminierten Polythioether oder/und mindestens einen acrylatterminierten Polyether zusammen mit mindestens einem mercaptoterminierten Polymer oder/und mindestens einem mehrfach mercapto-funktionalisierten Vernetzer,
c) mindestens ein mercaptoterminiertes Polysulfid, mindestens einen mercaptoterminierten Polythioether oder/und mindestens einen mercaptoterminierten Polyether zusammen mit mindestens einem Sauerstoffspender oder
d) mindestens ein Polyol, mindestens ein hydroxy-funktionalisiertes Polysulfid, mindestens einen hydroxy-funktionalisierten Polythioether oder/und mindestens einen hydroxy-funktionalisierten Polyether zusammen mit mindestens einem Isocyanat als Vernetzer aufweist und
dass die noch nicht ausgehärtete Dichtmasse einen latenten Katalysator enthält, der bei einer äußeren Energieeinwirkung in aktiver Form freigesetzt oder/und gebildet wird und **dadurch** die Reaktion zwischen Grundpolymer und Härter zur Aushärtung auslöst oder/und beschleunigt.

2. Verfahren nach Anspruch 1, **dadurch gekennzeichnet, dass** die Dichtmasse einen latenten Katalysator in aktiver Form eingekapselt enthält, dessen Kapselung bei äußerer Energieeinwirkung geschmolzen, aufgesprengt oder/und durch chemische Reaktion geöffnet oder aufgelöst wird.

3. Verfahren nach Anspruch 1, **dadurch gekennzeichnet, dass** die Dichtmasse einen latenten Katalysator in passiver Form enthält, der durch eine Schutzgruppe deaktiviert ist und dass die Deaktivierung des Katalysators durch äußere Energieeinwirkung zur Abspaltung der Schutzgruppe aufgehoben wird und der Katalysator in aktive Form überführt wird.

4. Verfahren nach Anspruch 1, **dadurch gekennzeichnet, dass** die Dichtmasse einen latenten Katalysator enthält, der anfangs in Form von Ausgangs- oder/und sich komplementär ergänzenden Teilkomponenten vorliegt, die erst später miteinander bei äußerer Energieeinwirkung zum aktiven Katalysator reagieren.

5. Verfahren nach einem der vorstehenden Ansprüche, **dadurch gekennzeichnet, dass** der latente Katalysator durch Einwirken von elektromagnetische Strahlung, insbesondere durch Wärme, freigesetzt wird, vorzugsweise durch Infrarotstrahlung, Kontakfinrärme, direkte oder/und indirekte Widerstandsheizung, induktive Beheizung oder hochfrequente Anregung wie z.B. Mikrowellen oder Ultraschall.

6. Verfahren nach einem der vorstehenden Ansprüche, **dadurch gekennzeichnet, dass** der latente Katalysator in einem Temperaturbereich von 60 bis 120°C freigesetzt wird, vorzugsweise in einem Temperaturbereich von 75 bis 95 °C.

7. Verfahren nach einem der vorstehenden Ansprüche, **dadurch gekennzeichnet, dass** die Wärme in einem Zeitraum von 0,1 bis 20 Minuten auf den latenten Katalysator einwirkt, um ihn freizusetzen.

8. Verfahren nach einem der vorstehenden Ansprüche, **dadurch gekennzeichnet, dass** die Dichtmasse nach Freisetzung des Katalysators für die Zeit der Aushärtung mit einer Temperatur im Bereich von 40 bis 90 °C beaufschlagt wird.

9. Verfahren nach einem der vorstehenden Ansprüche, **dadurch gekennzeichnet, dass** die zur Aktivierung des latenten Katalysators notwendige Wärmeenergie durch Wirbelströme direkt im mit Dichtmasse beschichteten, elektrisch leitfähigen Substrat erzeugt wird, wobei ein geeigneter, die Wirbelströme verursachender Induktor in einer Entfemung vom Substrat von ≤ 20 cm angebracht ist und von einem hochfrequenten Wechselstrom durchflossen wird.

10. Verfahren nach einem der vorstehenden Ansprüche, **dadurch gekennzeichnet, dass** das zur Aktivierung des latenten Katalysators notwendige Temperatumiveau zunächst durch einen hohen Induktorstrom innerhalb von 0,1 bis 20 Minuten erreicht und anschließend ein für die Aushärtung der Dichtmasse förderliches Temperatumiveau aufrechterhalten wird, wobei der den Wärmeeintrag bestimmende, durch den Induktor fließende Strom ggf. zur Regulierung verringert oder/und in Intervallen an- und abgeschaltet oder/und pulsartig erhöht und verringert wird.

11. Verfahren nach einem der vorstehenden Ansprüche, **dadurch gekennzeichnet, dass** die Dichtmasse oder/und der latente oder/und aktive Katalysator mit mindestens einer ihrer/seiner Eigenfrequenzen direkt angeregt wird.

12. Nicht-ausgehärtete Dichtmasse enthaltend ein Grundpolymer und einen Härter mit einem Katalysator, **dadurch gekennzeichnet, dass** sie eine chemische Basis nach Anspruch 1 aufweist und dass der Katalysator latent enthalten ist und durch äußere Energieeinwirkung in aktiver Form freigesetzt werden kann.

13. Nicht-ausgehärtete Dichtmasse nach Anspruch 12, **dadurch gekennzeichnet, dass** der latente Katalysator in aktiver Form eingekapselt enthalten ist, insbesondere in einer polymeren Hülle.

14. Nicht-ausgehärtete Dichtmasse nach Anspruch 12, **dadurch gekennzeichnet, dass** der latente Katalysator in passiver Form durch eine Schutzgruppe deaktiviert enthalten ist und dass die Deaktivierung des Katalysators durch äußere Energieeinwirkung zur Abspaltung der Schutzgruppe aufgehoben und der Katalysator in aktive Form überführt werden kann.

15. Nicht-ausgehärtete Dichtmasse nach Anspruch 12, **dadurch gekennzeichnet, dass** sie einen latenten Katalysator enthält, der anfangs in Form von Ausgangsoder/und sich komplementär ergänzenden Teilkomponenten vorliegt, die erst später miteinander bei äußerer Energieeinwirkung zum aktiven Katalysator reagieren.

16. Nicht-ausgehärtete Dichtmasse nach einem der Ansprüche 12 bis 15, **dadurch gekennzeichnet, dass** sie eine Dichtmasse zum Kleben von Teilen ist und ggf. der Abdichtung dient, insbesondere in der Luft- und Raumfahrt.

17. Nicht-ausgehärtete Dichtmasse nach einem der Ansprüche 12 bis 16, **dadurch gekennzeichnet, dass** sie als chemische Basis mindestens ein mercaptoterminiertes Polymer zusammen mit mindestens einem Acrylat, mit mindestens einem Isocyanat oder/und mit mindestens einem Epoxid-harz sowie zusammen mit mindestens einem mehrfach mercapto-funktionalisierten Vernetzer aufweist.

18. Nicht-ausgehärtete Dichtmasse nach einem der Ansprüche 12 bis 17, **dadurch gekennzeichnet, dass** sie als chemische Basis mindestens ein acrylatterminiertes Polymer zusammen mit mindestens einem mercaptoterminierten Polymer oder/und mit mindestens einem mehrfach mercapto-funktionalisierten Vernetzer aufweist.

19. Nicht-ausgehärtete Dichtmasse nach einem der Ansprüche 12 bis 18, **dadurch gekennzeichnet, dass** sie als chemische Basis mindestens ein mercaptoterminiertes Polymer und mindestens einen Sauerstoffspender aufweist.

20. Nicht-ausgehärtete Dichtmasse nach einem der Ansprüche 12 bis 19, **dadurch gekennzeichnet, dass** sie als chemische Basis mindestens ein Polyol oder/und mindestens ein hydroxy-funktionalisiertes Polymer und mindestens ein Isocyanat aufweist.

21. Nicht-ausgehärtete Dichtmasse nach einem der Ansprüche 12 bis 20, **dadurch gekennzeichnet, dass** sie als aktiven Katalysator mindestens eine organische Stickstoffverbindung, mindestens eine metallorganische Verbindung oder/und mindestens ein Metalloxid enthält sowie ggf. als Kapselung eine polymere Hülle aufweist.

22. Nicht-ausgehärtete Dichtmasse nach Anspruch 21, **dadurch gekennzeichnet, dass** die den Katalysator umgebende polymere Hülle vor der äußeren Energieeinwirkung nicht unterhalb von 40 °C schmelzen kann, noch in diesem Temperaturbereich chemisch durch die umgebenden Stoffe angegriffen werden kann und dass der Katalysator vor der äußeren Energieeinwirkung nicht durch Diffusion aus der polymeren Hülle austreten kann.

23. Nicht-ausgehärtete Dichtmasse nach einem der Ansprüche 12 bis 22, **dadurch gekennzeichnet, daß** ein aktiver Katalysator auf Basis von mindestens einer Stickstoffverbindung wie z.B. einem Amin durch Reaktion mit mindestens einer H-aciden Verbindung wie z.B. einer Säure oder/und einem Phenol blockiert ist.

24. Nicht-ausgehärtete Dichtmasse nach einem der Ansprüche 12 bis 23, **dadurch gekennzeichnet, daß** sie ab Freisetzung des latenten Katalysators in bis zu 1 h eine Zugscherfestigkeit von mindestens 1 N/mm² aufweist.

25. Ausgehärtete Dichtmasse hergestellt nach einem der Ansprüche 1 bis 11 oder/und hergestellt aus einer nicht-ausgehärteten Dichtmasse nach einem der Ansprüche 12 bis 24, **dadurch gekennzeichnet, daß** sie nach vollständiger Aushärtung eine Zugscherfestigkeit von mindestens 2 N/mm² erreicht hat.

26. Ausgehärtete Dichtmasse nach Anspruch 25, **dadurch gekennzeichnet, daß** sie eine chemische Beständigkeit wie in AIMS 04-05-001 gefordert aufweist.

27. Ausgehärtete Dichtmasse nach Anspruch 25 oder 26, **dadurch gekennzeichnet, daß** sie eine Bruchdehnung bei Raumtemperatur von mindestens 150 % gemessen nach DIN 65262-1 aufweist.

28. Ausgehärtete Dichtmasse nach einem der Ansprüche 25 bis 27, **dadurch gekennzeichnet, daß** sie eine Tieftemperaturflexibilität gemessen im Dornbiegeversuch bei - 55 °C aufweist.

29. Verwendung einer nicht-ausgehärteten Dichtmasse hergestellt nach einem der Ansprüche 1 bis 11 für den Bau und die Instandhaltung von Luft- und Raumfahrzeugen sowie von Automobilen und Schienenfahrzeugen, im Schiffsbau, im Apparate- und Maschinenbau, im Bauwesen, für die Herstellung von Möbeln.

30. Verwendung einer nicht-ausgehärteten Dichtmasse nach einem der Ansprüche 12 bis 24 für den Bau und die Instandhaltung von Luft- und Raumfahrzeugen sowie von Automobilen und Schienenfahrzeugen, im Schiffsbau, im Apparate- und Maschinenbau, im Bauwesen, für die Herstellung von Möbeln.

## Claims

1. A process for coating a substrate with a sealant, in particular for joining or gluing parts or/and sealing off or filling hollow and intermediate spaces, **characterized in that** the sealant contains as a chemical basis either
a) at least one mercapto-terminated polysulfide, at least one mercapto-terminated polythioether or/and at least one mercapto-terminated polyether together with at least one acrylate, at least one isocyanate or/and at least one epoxy resin as the crosslinking agent,
b) at least one acrylate-terminated polysulfide, at least one acrylate-terminated polythioether or/and at least one acrylate-terminated polyether together with at least one mercapto-terminated polymer or/and at least one crosslinking agent polyfunctionalized by mercapto,
c) at least one mercapto-terminated polysulfide, at least one mercapto-terminated polythioether or/and at least one mercapto-terminated polyether together with at least one oxygen donor or
d) at least one polyol, at least one hydroxy-functionalized polysulfide, at least one hydroxy-functionalized polythioether or/and at least one hydroxy-functionalized polyether together with at least one isocyanate as the crosslinking agent, and
**in that** the not yet cured sealant comprises a latent catalyst which is released or/and formed in the active form under external action of energy and as a result initiates or/and accelerates the reaction between the base polymer and hardener for the curing.

2. A process according to claim 1, **characterized in that** the sealant comprises a latent catalyst encapsulated in the active form, the encapsulation of which, under external action of energy, is melted, broken open or/and opened or dissolved by a chemical reaction.

3. A process according to claim 1, **characterized in that** the sealant comprises a latent catalyst in a passive form which is deactivated by a protective group, and **in that** the deactivation of the catalyst is eliminated by external action of energy to split off the protective group and the catalyst is converted into the active form.

4. A process according to claim 1, **characterized in that** the sealant comprises a latent catalyst which is initially present in the form of starting components or/and part-components complementary to each other, which react with one another only later under external action of energy to give the active catalyst.

5. A process according to one of the preceding claims, **characterized in that** the latent catalyst is released by the action of electromagnetic radiation, in particular by heat, preferably by intra-red radiation, contact heat, direct or/and indirect resistance heating, inductive heating or high frequency excitation, such as e.g. microwaves or ultrasound.

6. A process according to one of the preceding claims, **characterized in that** the latent catalyst is released in a temperature range from 60 to 120°C, preferably in a temperature range from 75 to 95°C.

7. A process according to one of the preceding claims, **characterized in that** the heat acts on the latent catalyst in a period of time of 0.1 to 20 minutes, in order to release it.

8. A process according to one of the preceding claims, **characterized in that** after release of the catalyst the sealant is exposed to a temperature in the range from 40 to 90°C for the curing time.

9. A process according to one of the preceding claims, **characterized in that** the heat energy necessary for activation of the latent catalyst is generated by eddy currents directly in the electrically conductive substrate coated with the sealant, a suitable inductor which causes the eddy currents being positioned at a distance of ≤ 20 cm from the substrate and a high-frequency alternating current flowing though the inductor.

10. A process according to one of the preceding claims, **characterized in that** the temperature level necessary for activation of the latent catalyst is initially achieved by a high inductor current within 0.1 to 20 minutes and a temperature level favourable for the curing of the sealant is then maintained, the current that determines the introduction of heat and flows though the inductor optionally, for regulation, being reduced or/and switched on and off at intervals or/and increased and reduced in a pulsed manner.

11. A process according to one of the preceding claims, **characterized in that** the sealant or/and the latent or/and active catalyst is excited directly with at least one of its/their characteristic frequencies.

12. A non-cured sealant comprising a base polymer and a hardener with a catalyst, **characterized in that** it contains a chemical basis according to claim 1, and **in that** the catalyst is contained in a latent form and can be released in the active form by external action of energy.

13. A non-cured sealant according to claim 12, **characterized in that** the latent catalyst is contained encapsulated in the active form, in particular in a polymeric shell.

14. A non-cured sealant according to claim 12, **characterized in that** the latent catalyst is contained in a passive form deactivated by a protective group, and **in that** the deactivation of the catalyst can be eliminated by external action of energy to split off the protective group and the catalyst can be converted into the active form.

15. A non-cured sealant according to claim 12, **characterized in that** it comprises a latent catalyst which is initially present in the form of starting components or/and part-components complementary to each other, which react with one another only later under external action of energy to give the active catalyst.

16. A non-cured sealant according to one of claims 12 to 15, **characterized in that** it is a sealant for gluing parts and is optionally used for sealing off, in particular in air and space travel.

17. A non-cured sealant according to one of claims 12 to 16, **characterized in that** it contains as the chemical basis at least one mercapto-terminated polymer together with at least one acrylate, with at least one isocyanate or/and with at least one epoxy resin and together with at least one crosslinking agent polyfunctionalized by mercapto.

18. A non-cured sealant according to one of claims 12 to 17, **characterized in that** it contains as the chemical basis at least one acrylate-terminated polymer together with at least one mercapto-terminated polymer or/and with at least one crosslinking agent polyfunctionalized by mercapto.

19. A non-cured sealant according to one of claims 12 to 18, **characterized in that** it contains as the chemical basis at least one mercapto-terminated polymer and at least one oxygen donor.

20. A non-cured sealant according to one of claims 12 to 19, **characterized in that** it contains as the chemical basis at least one polyol or/and at least one hydroxy-functionalized polymer and at least one isocyanate.

21. A non-cured sealant according to one of claims 12 to 20, **characterized in that** it comprises as the active catalyst at least one organic nitrogen compound, at least one organometallic compound or/and at least one metal oxide and optionally has a polymeric shell as encapsulation.

22. A non-cured sealant according to claim 21, **characterized in that** the polymeric shell surrounding the catalyst cannot melt below 40°C before the external action of energy, nor can it be attacked chemically by the surrounding substances in this temperature range, and **in that** the catalyst cannot emerge from the polymeric shell by diffusion before the external action of energy.

23. A non-cured sealant according to one of claims 12 to 22, **characterized in that** an active catalyst based on at least one nitrogen compound, such as e.g. an amine, is blocked by reaction with at least one H-acid compound, such as e.g. an acid or/and a phenol.

24. A non-cured sealant according to one of claims 12 to 23, **characterized in that** it has a shear strength of at least 1 N/mm² in up to 1 h from release of the latent catalyst.

25. A cured sealant prepared according to one of claims 1 to 11 or/and prepared from a non-cured sealant according to one of claims 12 to 24, **characterized in that** it has achieved a shear strength of at least 2 N/mm² after complete curing.

26. A cured sealant according to claim 25, **characterized in that** it has a chemical resistance as required in AIMS 04-05-001.

27. A cured sealant according to claim 25 or 26, **characterized in that** it has an elongation at break at room temperature of at least 150%, measured in accordance with DIN 65262-1.

28. A cured sealant according to one of claims 25 to 27, **characterized in that** it has a low-temperature flexibility measured in the mandrel flex test at -55°C.

29. Use of a non-cured sealant prepared according to one of claims 1 to 11 for the construction and maintenance of air and space vehicles and of automobiles and rail vehicles, in shipbuilding, in apparatus and machinery construction, in construction, and for the production of furniture.

30. Use of a non-cured sealant according to one of claims 12 to 24 for the construction and maintenance of air and space vehicles and of automobiles and rail vehicles, in shipbuilding, in apparatus and machinery construction, in construction, and for the production of furniture.

## Revendications

1. Procédé de revêtement d'un substrat avec une masse de matériau d'étanchéité, en particulier dans le but d'attacher ou de coller des pièces et/ou des garnitures d'étanchéité ou de remplir des espaces creux ou des vides intermédiaires, **caractérisé en ce que** la masse de matériau d'étanchéité comprend, chimiquement parlant :
a) soit au moins un polysulfure à groupe terminal mercapto, au moins un polythioéther à groupe terminal mercapto et/ou au moins un polyéther à groupe terminal mercapto, conjointement avec au moins un acrylate, au moins un isocyanate et/ou au moins une résine époxy en tant qu'agent(s) de réticulation,
b) soit au moins un polysulfure à groupe terminal acrylate, au moins un polythioéther à groupe terminal acrylate et/ou au moins un polyéther à groupe terminal acrylate, conjointement avec au moins un polymère à groupe terminal mercapto et/ou au moins un agent de réticulation doté de plusieurs groupes fonctionnels mercapto,
c) soit au moins un polysulfure à groupe terminal mercapto, au moins un polythioéther à groupe terminal mercapto et/ou au moins un polyéther à groupe terminal mercapto, conjointement avec au moins un donneur d'oxygène,
d) soit au moins un polyol, au moins un polysulfure à groupe fonctionnel hydroxy, au moins un polythioéther à groupe fonctionnel hydroxy, et/ou au moins un polyéther à groupe fonctionnel hydroxy, conjointement avec au moins un isocyanate en tant qu'agent de réticulation,
et **en ce que** la masse de matériau d'étanchéité, quand elle n'est pas encore durcie, contient un catalyseur latent qui est formé et/ou libéré sous forme active sous l'action d'une énergie extérieure et par lequel est déclenchée et/ou accélérée la réaction entre le polymère de base et le durcisseur, qui mène au durcissement de la masse.

2. Procédé conforme à la revendication 1, **caractérisé en ce que** la masse de matériau d'étanchéité contient un catalyseur latent sous forme active, enfermé dans des capsules qui, sous l'effet d'une énergie extérieure, fondent, éclatent et/ou se dissolvent ou s'ouvrent à la suite d'une réaction chimique.

3. Procédé conforme à la revendication 1, **caractérisé en ce que** la masse de matériau d'étanchéité contient un catalyseur latent sous forme passive, désactivé par un groupe protecteur, et **en ce que** la désactivation du catalyseur est supprimée sous l'effet d'une énergie extérieure qui provoque la séparation du groupe protecteur et donc la conversion du catalyseur en sa forme active.

4. Procédé conforme à la revendication 1, **caractérisé en ce que** la masse de matériau d'étanchéité contient un catalyseur latent qui se présente initialement sous la forme de constituants partiels de départ et/ou complémentaires qui ne réagissent entre eux qu'ultérieurement, sous l'effet d'une énergie extérieure, pour donner le catalyseur actif.

5. Procédé conforme à l'une des revendications précédentes, **caractérisé en ce que** le catalyseur latent est libéré sous l'action d'un rayonnement électromagnétique, en particulier sous l'action de chaleur, et de préférence par rayonnement infrarouge, chaleur de contact, chauffage direct et/ou indirect par résistance électrique, chauffage par induction, ou chauffage par impulsions haute fréquence comme par exemple micro-ondes ou ultra-sons.

6. Procédé conforme à l'une des revendications précédentes, **caractérisé en ce que** le catalyseur latent est libéré à une température située dans l'intervalle allant de 60 à 120 °C, et de préférence, de 75 à 95 °C.

7. Procédé conforme à l'une des revendications précédentes, **caractérisé en ce que** le catalyseur latent, pour être libéré, est soumis à l'action de la chaleur pendant un laps de temps de 0,1 à 20 minutes.

8. Procédé conforme à l'une des revendications précédentes, **caractérisé en ce que**, après libération du catalyseur, la masse de matériau d'étanchéité est exposée, pour la durée du durcissement, à une température située dans l'intervalle allant de 40 à 90 °C.

9. Procédé conforme à l'une des revendications précédentes, **caractérisé en ce que** l'énergie thermique nécessaire pour l'activation du catalyseur latent est produite par courants de Foucault, directement dans le substrat électroconducteur recouvert de la masse de matériau d'étanchéité, ceci grâce à un inducteur approprié, générateur de courants de Foucault, disposé à au plus 20 cm de distance du substrat et parcouru par un courant alternatif à haute fréquence.

10. Procédé conforme à l'une des revendications précédentes, **caractérisé en ce que** le niveau de température nécessaire pour l'activation du catalyseur latent est d'abord atteint grâce à un fort courant d'induction, en un laps de temps de 0,1 à 20 minutes, puis la température est maintenue à un niveau nécessaire pour le durcissement de la masse de matériau d'étanchéité, le courant déterminant l'apport de chaleur et passant dans l'inducteur étant éventuellement, pour régulation, réduit et/ou interrompu et rétabli par intervalles et/ou réduit et augmenté par impulsions.

11. Procédé conforme à l'une des revendications précédentes, **caractérisé en ce que** la masse de matériau d'étanchéité et/ou le catalyseur latent et/ou activé est ou sont directement excité(s) à au moins l'une de ses ou leurs fréquences propres.

12. Masse de matériau d'étanchéité non durcie, contenant un polymère de base et un durcisseur accompagné d'un catalyseur, **caractérisée en ce qu'**elle présente une composition chimique conforme à la revendication 1 et **en ce que** le catalyseur y est contenu à l'état latent et peut y être libéré sous forme active sous l'action d'une énergie extérieure.

13. Masse de matériau d'étanchéité non durcie, conforme à la revendication 12, **caractérisée en ce que** le catalyseur latent y est contenu encapsulé, en particulier dans une enveloppe en polymère, sous forme active.

14. Masse de matériau d'étanchéité non durcie, conforme à la revendication 12, **caractérisée en ce que** le catalyseur latent y est contenu sous forme passive, désactivé par un groupe protecteur, et **en ce que** la désactivation du catalyseur peut être supprimée sous l'effet d'une énergie extérieure qui provoque la séparation du groupe protecteur et donc la conversion du catalyseur en sa forme active.

15. Masse de matériau d'étanchéité non durcie, conforme à la revendication 12, **caractérisée en ce qu'**elle contient un catalyseur latent qui se présente initialement sous la forme de constituants partiels de départ et/ou complémentaires qui ne réagissent entre eux qu'ultérieurement, sous l'effet d'une énergie extérieure, pour donner le catalyseur actif.

16. Masse de matériau d'étanchéité non durcie, conforme à l'une des revendications 12 à 15, **caractérisée en ce qu'**elle constitue un matériau d'étanchéité destiné à coller des pièces qui servent éventuellement à assurer l'étanchéité, en particulier dans la navigation aérienne ou spatiale.

17. Masse de matériau d'étanchéité non durcie, conforme à l'une des revendications 12 à 16, **caractérisée en ce qu'**elle comporte, chimiquement parlant, au moins un polymère à groupe terminal mercapto, conjointement avec au moins un acrylate, avec au moins un isocyanate et/ou avec au moins une résine époxy, ainsi que conjointement avec au moins un agent de réticulation comportant plusieurs groupes fonctionnels mercapto.

18. Masse de matériau d'étanchéité non durcie, conforme à l'une des revendications 12 à 17, **caractérisée en ce qu'**elle comporte, chimiquement parlant, au moins un polymère à groupe terminal acrylate, conjointement avec au moins un polymère à groupe terminal mercapto et/ou avec au moins un agent de réticulation comportant plusieurs groupes fonctionnels mercapto.

19. Masse de matériau d'étanchéité non durcie, conforme à l'une des revendications 12 à 18, **caractérisée en ce qu'**elle comporte, chimiquement parlant, au moins un polymère à groupe terminal mercapto et au moins un donneur d'oxygène.

20. Masse de matériau d'étanchéité non durcie, conforme à l'une des revendications 12 à 19, **caractérisée en ce qu'**elle comporte, chimiquement parlant, au moins un polyol et/ou au moins un polymère à groupes fonctionnels hydroxy et au moins un isocyanate.

21. Masse de matériau d'étanchéité non durcie, conforme à l'une des revendications 12 à 20, **caractérisée en ce qu'**elle contient, en tant que catalyseur actif, au moins un composé organique azoté, au moins un composé organo-métallique et/ou au moins un oxyde de métal, et présente éventuellement, en guise d'encapsulage, une enveloppe en polymère.

22. Masse de matériau d'étanchéité non durcie, conforme à la revendication 21, **caractérisée en ce que** l'enveloppe en polymère qui renferme le catalyseur ne peut pas, à une température inférieure à 40 °C, fondre avant l'intervention d'une énergie extérieure, ni être, dans cet intervalle de température, chimiquement attaquée par les substances environnantes, et **en ce que** le catalyseur ne peut pas sortir de l'enveloppe en polymère par diffusion avant l'intervention d'une énergie extérieure.

23. Masse de matériau d'étanchéité non durcie, conforme à l'une des revendications 12 à 22, **caractérisée en ce qu'**elle contient un catalyseur actif à base d'au moins un composé azoté, par exemple une amine, qui est bloqué par suite d'une réaction avec au moins un composé acide, par exemple un acide et/ou un phénol.

24. Masse de matériau d'étanchéité non durcie, conforme à l'une des revendications 12 à 23, **caractérisée en ce qu'**elle présente, dans l'heure à compter de la libération du catalyseur latent, une résistance à la rupture en traction d'au moins 1 N/mm².

25. Masse de matériau d'étanchéité durcie, préparée conformément à l'une des revendications 1 à 11 et/ou préparée à partir d'une masse de matériau d'étanchéité non durcie, conforme à l'une des revendications 12 à 24, **caractérisée en ce qu'**elle présente, après durcissement complet, une résistance à la rupture en traction d'au moins 2 N/mm ².

26. Masse de matériau d'étanchéité durcie, conforme à la revendication 25, **caractérisée en ce qu'**elle présente une stabilité chimique répondant aux exigences de la norme AIMS 04-05-001.

27. Masse de matériau d'étanchéité durcie, conforme à la revendication 25 ou 26, **caractérisée en ce qu'**elle présente un allongement à la rupture à température ambiante, mesuré selon la norme DIN 65262-1, d'au moins 150 %.

28. Masse de matériau d'étanchéité durcie, conforme à l'une des revendications 25 à 27, **caractérisée en ce qu'**elle présente une flexibilité à basse température, dans l'essai de pliage sur mandrin, à -55 °C.

29. Emploi d'une masse de matériau d'étanchéité non-durcie, préparée conformément à l'une des revendications 1 à 11, pour la construction et l'entretien de véhicules aériens ou spatiaux, d'automobiles ou de véhicules sur rails, dans la construction de navires, dans la construction de machines et d'appareils, dans le bâtiment ou pour la fabrication de meubles.

30. Emploi d'une masse de matériau d'étanchéité non-durcie, conforme à l'une des revendications 12 à 24, pour la construction et l'entretien de véhicules aériens ou spatiaux, d'automobiles ou de véhicules sur rails, dans la construction de navires, dans la construction de machines et d'appareils, dans le bâtiment ou pour la fabrication de meubles.
